# EUROPÄISCHE PATENTSCHRIFT

(11) **EP 2 431 303 B1**
(45) Veröffentlichungstag und Bekanntmachung des Hinweises auf die Patenterteilung: **08.05.2013**
(21) Anmeldenummer: 11178776.8
(22) Anmeldetag: 25.08.2011
(51) Int. Cl.: B65G 1/137

(54) **Lastregal**
Shelf for storing heavy load
Etagère à fardeaux

(30) Priorität: 17.09.2010 DE 102010045748
(43) Veröffentlichungstag der Anmeldung: 21.03.2012
(73) Patentinhaber: STILL GmbH, 22113 Hamburg (DE)
(72) Erfinder: Tödter, Joachim, Dr., 22391 Hamburg (DE); Ertl, Hildegard, 13349 Berlin (DE)
(74) Vertreter: Geirhos, Johann

(56) Entgegenhaltungen:
- WO-A1-2010/094458
- US-A1- 2009 108 995
- US-A1- 2010 013 662
- US-B2- 7 690 568

## Beschreibung

Die Erfindung betrifft ein Lastregal zur Lagerung von Palettenlasten, insbesondere von Flachpaletten, Gitterboxen und Sonderpaletten, mit einer vorderen Tragstrebe und einer hinteren Tragstrebe, die das Lastgewicht der Palettenlasten bei aufgesetzter Palettenlast abstützen, und mit zumindest einem Transponder.

Für das Lagern von Palettenlasten sind Lastregale bekannt, die zwischen senkrechten Stützen auf verschiedenen Ebenen jeweils eine vordere Tragstrebe und eine hintere Tragstrebe aufweisen. Bei solchen auch als Palettenregalen bezeichneten Lastregalen muss zwischen den Tragstreben nicht unbedingt ein Regalboden angeordnet sein, da in die Ebenen nur Palettenlasten mittels eines Flurförderzeugs, das Lastgabeln aufweist, insbesondere mittels eines Gabelstaplers ein- und ausgelagert werden. Als Palettenlasten dienen dabei zum Beispiel übliche Flachpaletten, wie beispielsweise die genormten Europaletten, auf denen Waren und Güter verladen sind. Ebenso können Waren und Güter in Gitterboxen als Palettenlast eingelagert werden, die ebenfalls üblicherweise zu den Normmaßen der Europaletten kompatibel ausgestaltet sind und in Ausführungen mit diesen Maßen benutzt werden. Dabei ist der Abstand der vorderen Tragstrebe zu der hinteren Tragstrebe sowie die jeweilige Breite der oberen Auflagefläche der Tragstreben so auf die Palettenlasten abgestimmt, dass ein sicheres Absetzen auf diesen möglich ist und kein durchgehender Regalboden erforderlich ist, auch wenn ein solcher noch zusätzlich vorhanden sein kann, um auch flexibel Kleinteile und Gegenstände ohne Palette lagern zu können. Als Palettenlast können auch Sonderpaletten eingesetzt werden, die für spezielle Güter und Waren individuelle angepasst sind.

Um bei Lagerverwaltungssystemen die richtige Zuordnung zwischen Ware und Lagerplatz, an dem die Ware aus- bzw. eingelagert wird, zu erhalten, können die Lagerplätze in dem Lastregal mit Transpondern zur Lagerplatzkennzeichnung und Lagerplatzidentifizierung bzw. -erkennung versehen werden. Passive Transponder können auch ohne eigene Stromversorgung eine Kennung senden, wenn sie in den Bereich des Feldes eines Senders gelangen, wobei die Energie für den Transponder aus dem durch den Transponder empfangenen Signal des Senders stammt. Solche Transponder sind beispielsweise RFID-Transponder, "Radio Frequenzy Identification". Die Transponder, beispielsweise ein RFID-Transponder, weisen dabei eine wegen der Antenne flache Bauform auf.

Dabei muss jedoch vermieden werden, dass die Transponder beim Ein- und Auslagern von Palettenlasten beschädigt werden können. Eine Beschädigung kann durch die Palettenlast selbst oder durch Lastaufnahmemittel des Flurförderzeugs, insbesondere Lastgabeln, geschehen. Weiterhin muss erreicht werden, dass ein Transponder nur dann reagiert, wenn auch der tatsächlich zugehörige Lagerplatz in dem Lastregal angefahren wird, mithin die Zuordnung des Transponders zu dem Lagerplatz eindeutig ist.

Auch ist es wünschenswert, solche Transponder nachträglich anbringen zu können, um bestehende Palettenlager mit Lagerverwaltungssystemen ausrüsten zu können, die eine Lagerplatzidentifikation erfordern.

Der vorliegenden Erfindung liegt daher die Aufgabe zugrunde, ein Lastregal, insbesondere ein Palettenregal, mit Transpondern zur Verfügung zu stellen, bei dem der Transponder geschützt angebracht ist, ein kostengünstiger Standardtransponder eingesetzt werden kann und das eine eindeutige Zuordnung des Transponders zu einem Lagerplatz ermöglicht.

Diese Aufgabe wird durch ein Lastregal mit den Merkmalen des Anspruchs 1 gelöst. Vorteilhafte Weiterbildungen werden durch die Unteransprüche angegeben.

Die Aufgabe wird erfindungsgemäß dadurch gelöst, dass bei einem Lastregal zur Lagerung von Palettenlasten, insbesondere von Flachpaletten, Gitterboxen und Sonderpaletten, das eine vordere Tragstrebe und eine hintere Tragstrebe, die das Lastgewicht der Palettenlasten bei aufgesetzter Palettenlast abstützen, sowie zumindest einem Transponder aufweist, der Transponder an der Rückseite der vorderen Tragstrebe angeordnet ist.

Dadurch ist der Transponder vorteilhaft gegen Beschädigungen durch auf den Tragstreben aufliegende Palettenlasten geschützt, da diese nur auf der Oberseite der Tragstreben aufliegen. Der Transponder ist aber auch vor Beschädigungen durch die Lastaufnahmemittel von Flurförderzeugen, insbesondere durch Lastgabeln von Gabelstaplern, geschützt, wenn durch diese eine Palettenlast an dem Lagerplatz ein-oder ausgelagert wird. Die Rückseite der vorderen Tragstrebe kann von einer Lastgabel bei Anfahrt an die Vorderseite des Lastregals nicht erreicht werden. Die Position an der Rückseite der Tragstrebe ist aber andererseits gut zugänglich für eine nachträgliche Ausstattung mit Transpondern. Dabei können Standardtransponder verwendet werden und diese ohne weitere Haltevorrichtungen z.B, auf die vordere Tragstrebe aufgeklebt werden. Auch ist an dieser Position der Transponder gut gegen unbefugte Manipulationen geschützt.

Vorteilhaft ist der Transponder ein RFID-Transponder.

RFID-Transponder stehen als kostengünstige Standardtransponder zur Verfügung und sind bewährte Lösungen. Überdies können der Chip, oftmals als Folienchip, und mit diesem zusammen die Antenne sehr kompakt und als flaches Bauelement ausgebildet werden, wodurch die Anbringung entsprechend der erfindungsgemäßen Lösung erleichtert wird.

In günstiger Ausführungsform weist der Transponder einen Befestigungsteil zur Verbindung mit der vorderen Tragstrebe und einen Antennenteil auf, der zumindest die Antenne des Transponders enthält und zu der vorderen Tragstrebe in der horizontalen Ebene abgewinkelt, insbesondere um 90° gedreht, orientiert ist.

Dadurch kann eine Ausrichtung der Antenne zu der Sende- und Empfangseinrichtung eines Flurförderzeugs erreicht werden, wenn die Sende- und Empfangseinrichtung des Flurförderzeugs in Längsrichtung des Flurförderzeugs ausgerichtet ist. Beim Einfahren in den Lagerplatz kann somit der dem Lagerplatz zugeordnete Transponder sicher und eindeutig ausgelesen werden.

In einer erfindungsgemäßen Ausgestaltung weist der Transponder eine langgestreckte, flache Bauform auf und ist zwischen Befestigungsteil und Antennenteil abgeknickt, insbesondere um 90° umgeknickt.

Dies ermöglicht die kostengünstige Verwendung von Standardtranspondern, deren Antenne auf eine gewünschte Richtung durch "Falten" ausgerichtet werden kann, und die z.B. mit dem Befestigungsteil auf einfache Weise an die Tragstrebe angebracht werden, beispielsweise angeklebt werden. Dabei sind grundsätzlich auch Orientierungen in andere Richtungen denkbar, indem der Knickwinkel variiert wird und/oder die Ausrichtung der Knickkante geändert wird, indem der Befestigungsteil verdreht an der Tragstrebe angebracht wird, z.B. festgeklebt wird. Dadurch wäre z.B. auch ein 45° Winkel möglich oder eine Orientierung in Richtung senkrecht nach oben bzw. unten.

Vorteilhaft ist der Transponder wasserdicht in Kunststoff versiegelt, insbesondere einlaminiert.

Vorteilhaft erfolgt dadurch ein wasserdichter Verschluss und wird Schutz vor Witterungseinflüssen und Verschmutzung gewährleistet.

Es kann eine Mehrzahl von Transpondern an der Rückseite der vorderen Tragstrebe in Abständen angeordnet sein, die der benötigten Lagerbreite von genormten Palettenlasten, insbesondere der Breite einer Europalette, entsprechen.

In einer vorteilhaften Ausgestaltung der Erfindung sind die Transponder bevorzugt im mittleren Bereich eines Lagerplatzes einer Palettenlast angeordnet.

Diese Stelle befindet sich vorteilhaft bei einem Einfahren in den Lagerplatz mit Lastgabeln zwischen den beiden Gabelzinken. Ist nun eine Sende- und Empfangseinrichtung des Flurförderzeugs so eingerichtet, dass der Bereich zwischen den Gabelzinken erfasst wird, so wird der Transponder eindeutig dann aktiviert und sendet ein Antwortsignal, wenn der zugehörige Lagerplatz angefahren wird. Durch diese Positionierung wird eine eindeutige Auswahl des Transponders eines angefahrenen Lagerplatzes erleichtert und ermöglicht. Insbesondere bei einer Anordnung der Sende- und Empfangseinrichtung des Flurförderzeugs an der Innenseite einer Gabelzinke wird durch die Gabelzinke die Antenne der Sende- und Empfangseinrichtung des Flurförderzeugs gegenüber einem benachbarten Transponder an einen benachbarten Lagerplatz abgeschirmt.

Der Transponder kann durch Kleben an der Tragstrebe befestigt sein. Alternativ kann der Transponder an der Tragstrebe durch Spannmittel, beispielsweise Kabelbinder, befestigt und angebracht werden.

Für Lagerplätze in einer untersten Ebene des Lastregals auf Bodenebene können Transponder in Gehäusen auf dem Boden angeordnet sein.

Die Gehäuse können aus Kunststoff und wasserdicht versiegelt sein. Alternativ kann ein wasserdicht versiegelter Transponder in ein einen Hohlraum eines Kunststoffgehäuses angeordnet werden. Hierdurch wird ein wasserdichter Verschluss und Schutz vor Witterungseinflüssen und Verschmutzung der auf den Bodenlagerplatzen des Lastregals angeordneten Transponder gewährleistet.

Vorteilhaft sind die Gehäuse jeweils im mittleren Bereich der Breite eines Lagerplatzes einer Palettenlast angeordnet.

Damit ergeben sich auch für eine Lagerung in dem Lastregal in einer untersten Ebene ganz unten auf dem Boden die oben genannten Vorteile einer eindeutigen Identifizierung des Lagerplatzes.

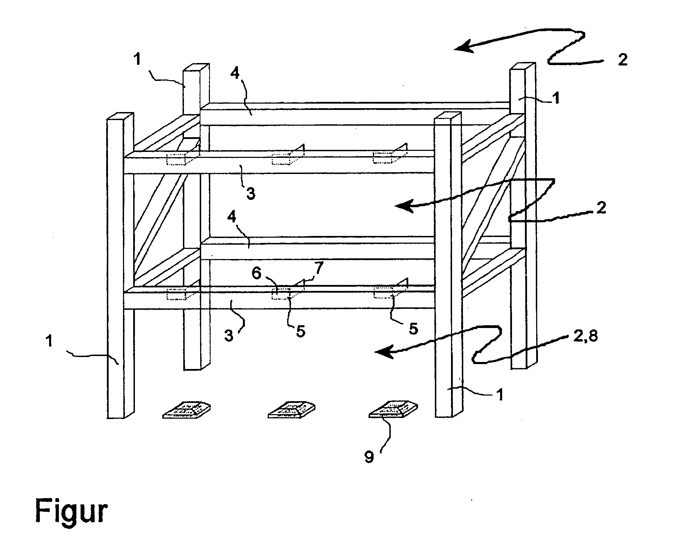

Weitere Vorteile und Einzelheiten der Erfindung werden anhand des in der schematischen Figur dargestellten Ausführungsbeispiels näher erläutert. Dabei zeigt die Figur ein erfindungsgemäßes Lastregal in perspektivischer Ansicht von vorne.

Die Figur zeigt ein Lastregal von vorne, bei dem zwischen senkrechten Stützen 1 auf verschiedenen Ebenen 2 jeweils eine vordere Tragstrebe 3 und eine hintere Tragstrebe 4 angeordnet ist. Zwischen der vorderen Tragstrebe 3 und der hinteren Tragstrebe 4 ist dabei kein Regalboden angeordnet, jedoch wäre dies möglich. Palettenlasten können in jeder Ebene 2 in entsprechenden Lagerplatzen eingelagert werden.

In der Mitte der Breite eines jeden Lagerplatzes, beispielsweise entsprechend der Breite einer Europalette als genormter Palettenlast, ist auf der Rückseite der vorderen Tragstrebe 3 ein Transponder 5 angeordnet, der aus einem flächigen, rechteckigen und bevorzugt in Kunststoff wasserdicht einlaminierten RFID-Transponder besteht und einen Befestigungsteil 6 sowie einen Antennenteil 7 aufweist, in dem sich die Transponderantenne befindet.

Der Antennenteil ist bevorzugt um 90° abgeknickt und ragt in das Lastregalinnere, wodurch die Antenne in dieselbe Richtung ausgerichtet ist, wie die Lastgabeln oder die Fahrzeugachse eines Flurförderzeugs, zum Beispiel eines Gabelstaplers, der das Lastregal und den entsprechenden Lagerplatz zum Ein- oder Auslagern anfährt. Wenn eine Sende- und Empfangseinrichtung, beispielsweise eine Gabelzinkenantenne, des Flurförderzeugs eine in dieselbe Richtung ausgerichtete Antenne aufweist, wird dadurch ein guter Signalempfang gewährleistet.

In einer untersten Ebene 8 des Lastregals sind Transponder in Gehäusen 9 aus Kunststoff ebenfalls in der Mitte der Breite eines jeden Lagerplatzes auf dem Boden angeordnet.

Die Gehäuse 9 mit den Transpondern sind innerhalb der Bodenlagerplätze und bevorzugt hinter der Vorderkante der Stützen 1 bzw. der Tragstreben 3 auf dem Boden angeordnet.

Die Antennen dieser Transponder in den Gehäusen 9 sind ebenfalls in Richtung des Lastregalinneren ausgerichtet und die Gehäuse 9 sind so stabil ausgelegt, dass diese überfahrsicher sind und nicht durch das Gewicht einer Palettenlast beschädigt werden können. Dadurch kann auch in der untersten Ebene 8 eine Identifizierung des Lagerplatzes erfolgen und unabhängig von der Bodenbeschaffenheit erreicht werden. Durch die Anordnung der Transpondern in den Gehäusen 9 wird weiterhin eine gute Lesbarkeit der Transpondern bei verschiedenen Bodenbelägen bzw. Bodenbeschichtungen gewährleistet. Die Gehäuse 9 können vor allem leicht angebracht werden und erfordern keine Öffnungen in der Bodenfläche.

Wenn beim Ein- oder Auslagern ein Gabelstapler mit seiner Lastgabel einen Lagerplatz in dem Lastregal anfährt, so befindet sich der jeweilige Transponder 5 bzw. das Gehäuse 9 mit dem darin angeordneten Transponder zwischen den Gabelzinken der Lastgabel. Ist nun eine Sende- und Empfangseinrichtung, beispielsweise eine Gabelzinkenantenne, des Flurförderzeugs so eingerichtet, dass der Bereich zwischen den Gabelzinken erfasst wird, so wird der Transponder 5 bzw. der im Gehäuse 9 angeordneten Transponder eindeutig dann aktiviert und sendet ein Antwortsignal, wenn der zugehörige Lagerplatz angefahren und mit der Lastgabel in das Lastregal und den entsprechenden Lagerplatz eingefahren wird.

Mit der erfindungsgemäßen Anordnung der Transponder wird hierbei das Auslesen benachbarter Transponder an benachbarten Lagerplätzen sicher vermeiden, wodurch mit der erfindungsgemäßen Anordnung der Transponder eine eindeutige Lagerplatzerkennung erzielt wird.

## Patentansprüche

1. Lastregal zur Lagerung von Palettenlasten, insbesondere von Flachpaletten, Gitterboxen und Sonderpaletten, mit einer vorderen Tragstrebe (3) und einer hinteren Tragstrebe (4), die das Lastgewicht der Palettenlasten bei aufgesetzter Palettenlast abstützen, und zumindest einem Transponder (5),
**dadurch gekennzeichnet,**
**dass** der Transponder (5) an der Rückseite der vorderen Tragstrebe (3) angeordnet ist.

2. Lastregal nach Anspruch 1,
**dadurch gekennzeichnet,**
**dass** der Transponder (5) ein RFID-Transponder ist.

3. Lastregal nach Anspruch 1 oder 2,
**dadurch gekennzeichnet,**
**dass** der Transponder (5) einen Befestigungsteil (6) zur Verbindung mit der vorderen Tragstrebe (3) und einen Antennenteil (7) aufweist, der zumindest die Antenne des Transponders (5) enthält und zu der vorderen Tragstrebe (3) in der horizontalen Ebene abgewinkelt, insbesondere um 90° gedreht orientiert, ist.

4. Lastregal nach Anspruch 3,
**dadurch gekennzeichnet,**
**dass** der Transponder (5) eine langgestreckte, flache Bauform aufweist und zwischen Befestigungsteil (6) und Antennenteil (7) abgewinkelt ist, insbesondere um 90° umgeknickt ist.

5. Lastregal nach einem der Ansprüche 1 bis 4,
**dadurch gekennzeichnet,**
**dass** der Transponder (5) wasserdicht in Kunststoff versiegelt, insbesondere einlaminiert ist.

6. Lastregal nach einem der Ansprüche 1 bis 5,
**dadurch gekennzeichnet,**
**dass** eine Mehrzahl von Transpondern (5) an der Rückseite der vorderen Tragstrebe (3) in Abständen angeordnet ist, die der benötigten Lagerbreite von genormten Palettenlasten, insbesondere der Breite einer Europalette, entsprechen.

7. Lastregal nach Anspruch 6,
**dadurch gekennzeichnet,**
**dass** die Transponder (5) in der Mitte der Breite eines Lagerplatzes einer Palettenlast angeordnet sind.

8. Lastregal nach einem der Ansprüche 1 bis 7,
**dadurch gekennzeichnet,**
**dass** der Transponder (5) durch Kleben befestigt ist.

9. Lastregal nach einem der Ansprüche 1 bis 8,
**dadurch gekennzeichnet,**
**dass** für Lagerplätze in einer untersten Ebene (8) des Lastregals Transponder in Gehäusen (9) auf dem Boden angeordnet sind.

10. Lastregal nach Anspruch 9,
**dadurch gekennzeichnet,**
**dass** die Gehäuse (9) aus Kunststoff und wasserdicht versiegelt sind.

11. Lastregal nach Anspruch 9 oder 10,
**dadurch gekennzeichnet,**
**dass** die Gehäuse (9) jeweils in der Mitte der Breite eines Lagerplatzes einer Palettenlast angeordnet sind.

## Claims

1. Load-bearing rack for the storage of pallet loads, in particular of flat pallets, box pallets and special pallets, having a front carrying strut (3) and a rear carrying strut (4), which support the weight of the pallet loads with the latter placed in position, and having at least one transponder (5),
**characterized**
**in that** the transponder (5) is arranged on the rear side of the front carrying strut (3).

2. Load-bearing rack according to Claim 1,
**characterized**
**in that** the transponder (5) is an RFID transponder.

3. Load-bearing rack according to Claim 1 or 2,
**characterized**
**in that** the transponder (5) has a fastening part (6), for connection to the front carrying strut (3), and an antenna part (7), which contains at least the antenna of the transponder (5) and is angled, in particular rotated through 90°, in the horizontal plane in relation to the front carrying strut (3).

4. Load-bearing rack according to Claim 3,
**characterized**
**in that** the transponder (5) is of elongate, flat construction and is angled, in particular inflected through 90°, between the fastening part (6) and antenna part (7).

5. Load-bearing rack according to one of Claims 1 to 4,
**characterized**
**in that** the transponder (5) is sealed, in particular laminated, in a water-tight manner in plastics material.

6. Load-bearing rack according to one of Claims 1 to 5,
**characterized**
**in that** a plurality of transponders (5) are arranged on the rear side of the front carrying strut (3) at spacings which correspond to the required storage width of standard pallet loads, in particular to the width of a Euro pallet.

7. Load-bearing rack according to Claim 6,
**characterized**
**in that** the transponders (5) are arranged in the centre of the width of a storage location of a pallet load.

8. Load-bearing rack according to one of Claims 1 to 7,
**characterized**
**in that** the transponder (5) is fastened by adhesive bonding.

9. Load-bearing rack according to one of Claims 1 to 8,
**characterized**
**in that**, for storage locations in a lowermost plane (8) of the load-bearing rack, transponders are arranged in housings (9) on the floor.

10. Load-bearing rack according to Claim 9,
**characterized**
**in that** the housings (9) are made of plastics material and are sealed in a water-tight manner.

11. Load-bearing rack according to Claim 9 or 10,
**characterized**
**in that** the housings (9) are each arranged in the centre of the width of a storage location of a pallet load.

## Revendications

1. Etagère pour lourdes charges pour le stockage de charges de palettes, en particulier de palettes plates, de conteneurs à claire-voie et de palettes spéciales, comprenant une traverse de support avant (3) et une traverse de support arrière (4), qui supportent le poids de la charge des charges de palettes lorsque la charge de palette est posée, et au moins un transpondeur (5),
**caractérisée en ce que**
le transpondeur (5) est disposé sur le côté arrière de la traverse de support avant (3).

2. Etagère pour lourdes charges selon la revendication 1,
**caractérisée en ce que**
le transpondeur (5) est un transpondeur RFID.

3. Etagère pour lourdes charges selon la revendication 1 ou 2,
**caractérisée en ce que**
le transpondeur (5) présente une partie de fixation (6) pour la connexion à la traverse de support avant (3) et une partie d'antenne (7) qui contient au moins l'antenne du transpondeur (5) et qui est coudée par rapport à la traverse de support avant (3), dans le plan horizontal, notamment qui est orientée de manière tournée à 90°.

4. Etagère pour lourdes charges selon la revendication 3,
**caractérisée en ce que**
le transpondeur (5) présente une forme structurelle allongée et plate, et est coudé entre la partie de fixation (6) et la partie d'antenne (7), notamment est fléchi de 90°.

5. Etagère pour lourdes charges selon l'une quelconque des revendications 1 à 4,
**caractérisée en ce que**
le transpondeur (5) est scellé de manière étanche à l'eau dans du plastique, notamment est revêtu d'un laminé.

6. Etagère pour lourdes charges selon l'une quelconque des revendications 1 à 5,
**caractérisée en ce**
**qu'**une pluralité de transpondeurs (5) est disposée sur le côté arrière de la traverse avant (3) à intervalles qui correspondent à la largeur de stockage nécessaire de charges de palettes standard, notamment à la largeur d'une europalette.

7. Etagère pour lourdes charges selon la revendication 6,
**caractérisée en ce que**
les transpondeurs (5) sont disposés au milieu de la largeur d'un emplacement de stockage d'une charge de palette.

8. Etagère pour lourdes charges selon l'une quelconque des revendications 1 à 7,
**caractérisée en ce que**
le transpondeur (5) est fixé par collage.

9. Etagère pour lourdes charges selon l'une quelconque des revendications 1 à 8,
**caractérisée en ce que**
pour des emplacements de stockage dans un plan inférieur (8) de l'étagère pour lourdes charges, des transpondeurs sont disposés dans des boîtiers (9) sur le sol.

10. Etagère pour lourdes charges selon la revendication 9,
**caractérisée en ce que**
les boîtiers (9) sont scellés en plastique et de manière étanche à l'eau.

11. Etagère pour lourdes charges selon la revendication 9 ou 10,
**caractérisée en ce que**
les boîtiers (9) sont disposés à chaque fois au milieu de la largeur d'un emplacement de stockage d'une charge de palette.
